# EUROPÄISCHE PATENTSCHRIFT

(11) **EP 2 276 652 B1**
(45) Veröffentlichungstag und Bekanntmachung des Hinweises auf die Patenterteilung: **25.06.2014**
(21) Anmeldenummer: 09745507.5
(22) Anmeldetag: 02.05.2009
(51) Int. Cl.: B60R 22/34

(54) **SELBSTSPERRENDER GURTAUFROLLER**
SELF-LOCKING BELT RETRACTOR
ENROULEUR AUTOBLOQUANT POUR UNE CEINTURE DE SÉCURITÉ

(30) Priorität: 16.05.2008 DE 102008023996
(43) Veröffentlichungstag der Anmeldung: 26.01.2011
(73) Patentinhaber: Autoliv Development AB, 447 83 Vårgårda (SE)
(72) Erfinder: SUPTHUT, Alexander, 25497 Prisdorf (DE); HEINE, Volkmar, 22589 Hamburg (DE); SEDDIG, Detlev, 25337 Elmshorn (DE); KÜHL, Jens, 25355 Bevern (DE)
(74) Vertreter: Müller Verweyen
(86) Internationale Anmeldenummer: PCT/EP2009/003164
(87) Internationale Veröffentlichungsnummer: WO 2009/138173

(56) Entgegenhaltungen:
- EP-A- 1 595 758
- EP-A- 1 867 533
- DE-C1- 19 681 341
- DE-U1- 20 215 831
- DE-U1- 20 301 941

## Beschreibung

Die Erfindung betrifft einen selbstsperrenden Gurtaufroller mit den Merkmalen des Oberbegriffes des Anspruchs 1.

Aus der DE 196 81 341 C1 ist ein gattungsgemäßer Gurtaufroller bekannt, bei dem der Gurtaufroller eine Gurtwickelwelle und einen Profilkopf aufweist, zwischen denen eine als Torsionsstab ausgebildete Kraftbegrenzungseinrichtung angeordnet ist. Der Profilkopf ist mit einem fahrzeugsensitiv und/oder gurtbandsensitiv ansteuerbaren Blockiersperrglied versehen, welches in eine dem Gehäuse des Gurtaufrollers zugeordnete Verzahnung einsteuerbar ist und somit den Gurtaufroller blockiert. Bei weiterem Ansteigen der Gurtauszugskraft und Überschreiten einer vorgegebenen Kraftschwelle kann der Gurtwellenkörper dann in Gurtauszugsrichtung rotieren, wobei der Torsionsstab dann energieverzehrend tordiert wird. Der Gurtwellenkörper und der Profilkopf sind über Abscherzapfen miteinander verstemmt, welche beide Teile miteinander im Normalbetrieb zu einer Einheit verbinden. Die Abscherzapfen scheren dann vor der Torsion des Torsionsstabes ab, so dass der Gurtwellenkörper und der Profilkopf mit dem Einsetzen der Kraftbegrenzung getrennt sind. Da der Torsionsstab während der Torsion auch eine Längung ausführen kann, besteht dabei die Gefahr, dass beide Teile auseinandergedrückt werden und dadurch die Lagerung und Drehung des Gurtwellenkörpers in Gurtauszugsrichtung gestört werden kann.

Aufgabe der Erfindung ist es, einen selbstsperrenden Gurtaufroller der eingangs genannten Art zu schaffen, bei dem der Gurtwellenkörper und der Profilkopf auch während der aktivierten Kraftbegrenzungseinrichtung in Axialrichtung sicher miteinander verbunden sind.

Die Lösung der Aufgabe erfolgt erfindungsgemäß durch einen selbstsperrenden Gurtaufroller mit den Merkmalen des Anspruchs 1, während bevorzugte Weiterbildungen den Unteransprüchen zu entnehmen sind.

Erfindungsgemäß wird vorgeschlagen, dass der Profilkopf oder der Gurtwellenkörper einen radial nach außen vorstehenden Absatz und der jeweils andere Teil eine durch eine axial gerichtete Wandung gebildete Aufnahme aufweist, in der der Profilkopf oder der Gurtwellenkörper mit dem Absatz angeordnet ist, und die Wandung den Absatz wenigstens abschnittsweise durch einen radial nach innen gerichteten Vorsprung hintergreift. Damit sind der Gurtwellenkörper und der Profilkopf durch eine Struktur miteinander verbunden, die auch während der Kraftbegrenzung, also der Relativdrehung des Gurtwellenkörpers gegenüber dem Profilkopf, erhalten bleibt und so einen axialen Zusammenhalt der beiden Teile zueinander bewirkt.

Es wird weiter vorgeschlagen, dass der Absatz an seiner von dem jeweils anderen Teil abgewandten Seite eine Phase oder einen Radius aufweist. Dadurch wird beim radial einwärts gerichteten Verformen der Wandung eine erhöhte Last in diese eingeleitet, so dass die Wandung prozesssicher plastisch verformt werden kann. Ferner wird dadurch sichergestellt, dass die Wandung nach dem Umformen unter Bildung einer ebenen Anlagefläche an dem Absatz anliegt.

Es hat sich aus verschiedenen Versuchen herausgestellt, dass die Wandung eine Wandstärke von 0,9-1,3 mm aufweisen soll. Aufgrund der vorgeschlagenen Wandstärke ist die Herstellung der Wandung bei Ausbildung des Profilkopfes oder des Gurtwellenkörpers als Gussteil möglich. Ferner kann die Wandung in einem anschließenden plastischen Umformprozess nach innen gebogen werden und besitzt anschließend noch die nötige Materialfestigkeit, um die auftretenden Axialkräfte während der Kraftbegrenzung aufzunehmen.

Damit das Zusammenfügen des Profilkopfes und des Gurtwellenkörpers auch in einem automatisierten Fertigungsprozess möglich ist, wird vorgeschlagen, dass die Wandung eine radial innenseitig angeordnete Phase aufweist.

Ferner wird vorgeschlagen, dass die Wandung eine radial außenseitig angeordnete Phase oder einen radial außenseitig angeordneten Radius aufweist, so dass das Ergreifen der Wandung in einem maschinellen Umformprozess erleichtert ist.

Eine weitere bevorzugte Ausführungsform der Erfindung ist darin zu sehen, dass der radial nach innen gerichtete Vorsprung unter Ausübung einer Klemmkraft an dem Absatz anliegt, so dass der Profilkopf und der Gurtwellenkörper im Normalbetrieb eine Einheit bilden, ohne dass die Kraftbegrenzungseinheit belastet wird.

Die durch die Klemmkraft bewirkte Losbrechkraft in Gurtauszugsrichtung mit dem Einsetzen der Relativdrehung des Gurtwellenkörpers gegenüber dem blockierten Profilkopf sollte dann bevorzugt kleiner als das Kraftbegrenzungsniveau der Kraftbegrenzungseinrichtung sein, so dass das Kraftbegrenzungsniveau alleinig durch die Kraftbegrenzungseinrichtung bestimmt wird, und durch das Losbrechen der Verbindung zwischen dem Profilkopf und dem Gurtwellenkörper keine unerwünschte Kraftspitze erzeugt wird.

Weiterhin wird vorgeschlagen, dass der Innendurchmesser der Aufnahme 0,4-1,0 mm größer als der Außendurchmesser des Absatzes ist, so dass der Absatz neben der axialen Verbindung von Profilkopf und Gurtwellenkörper zusätzlich eine Lagerfunktion für den sich während der Kraftbegrenzung gegenüber dem Profilkopf drehenden Gurtwellenkörper ausübt.

Im Folgenden wird die Erfindung anhand eines bevorzugten Ausführungsbeispieles näher erläutert, wobei in den Figuren im Einzelnen zu erkennen ist:
- Fig.1:: Gurtwellenkörper und Profilkopf vor dem Verbinden
- Fig.2:: Gurtwellenkörper und Profilkopf mit erfindungsgemäßer axialer Verbindung
- Fig.3:: Gurtwellenkörper und Profilkopf in Explosionsdarstellung
- Fig.4:: Vergrößerter Ausschnitt des Gurtwellenkörpers und des Profilkopfes vor der Verbindung
- Fig.5:: Vergrößerter Ausschnitt des Gurtwellenkörpers und des Profilkopfes mit erfindungsgemäßer axialer Verbindung

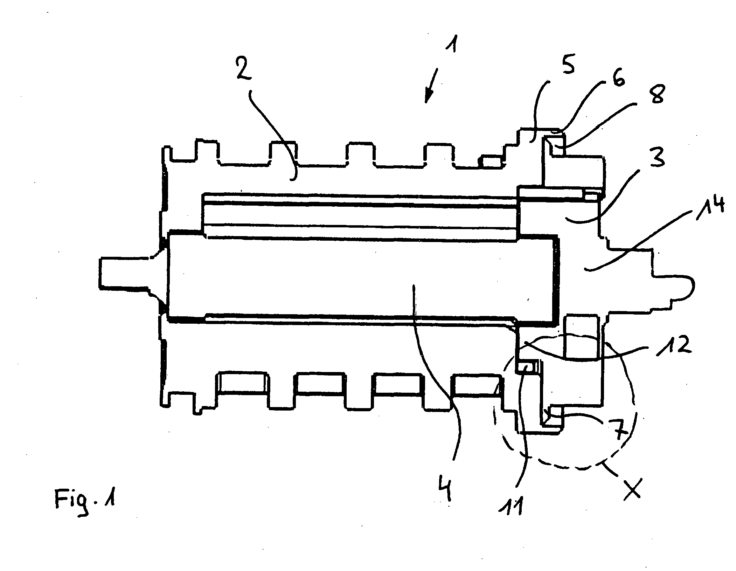

In Figur 1 ist die Gurtwelle 1 eines selbstsperrenden Gurtaufrollers mit einem Gurtwellenkörper 2, einem Profilkopf 3 und einem mit seinen Enden fest mit dem Gurtwellenkörper 2 und dem Profilkopf 3 als Kraftbegrenzungseinheit wirkenden Torsionsstab 4 zu erkennen. Die übrigen Teile des selbstsperrenden Gurtaufrollers sind aus Gründen der Übersichtlichkeit nicht dargestellt und können als im Stand der Technik bekannt vorausgesetzt werden. Der Profilkopf 3 ist gegenüber mittels einer fahrzeugsensitiv und/oder gurtbandsensitiv ansteuerbaren Blockiervorrichtung, wie z.B. einer an dem Profilkopf 3 gelagerten Blockierklinke, gegenüber einem nicht dargestellten Gurtaufrollerrahmen blockierbar. Bei blockiertem Profilkopf und Überschreiten einer vorbestimmten Gurtbandauszugskraft rotiert der Gurtwellenkörper 2 in Gurtbandauszugsrichtung, wobei der Torsionsstab 4 dann unter Energieabsorption plastisch verformt wird.

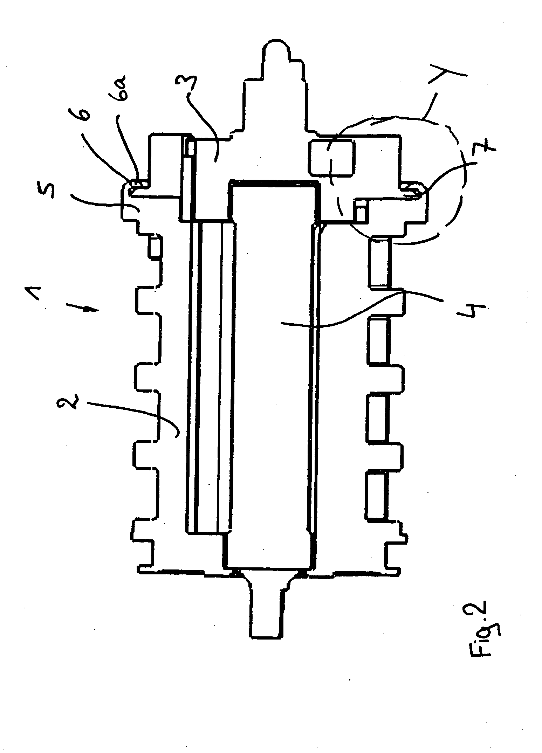

Der Gurtwellenkörper 2 weist an seiner dem Profilkopf 3 zugewandten Seite einen sich radial nach außen erstreckenden Flansch 5 auf, der an seinem radial äußeren Rand eine axial gerichtete Wandung 6 zur Bildung einer Aufnahme 8 aufweist. Ferner ist der Gurtwellenkörper 2 mit einer auf einem kleineren Radius angeordneten zweiten Aufnahme 11 versehen. Der an der Stirnseite des Gurtwellenkörpers 2 angeordnete Profilkopf 3 umfasst einen Grundkörper 14, in dem eine nicht dargestellte Blockierklinke gelagert ist, einen sich axial in die zweite Aufnahme 11 erstreckenden Absatz 12 und einen sich radial nach außen erstreckenden und in der Aufnahme 8 angeordneten Absatz 7. In Fig.2 ist die identische Anordnung zu erkennen, wobei hier das Ende 6a der Wandung 6 nach innen gebogen ist, so dass der Profilkopf 3 und der Gurtwellenkörper 2 miteinander verbunden sind.

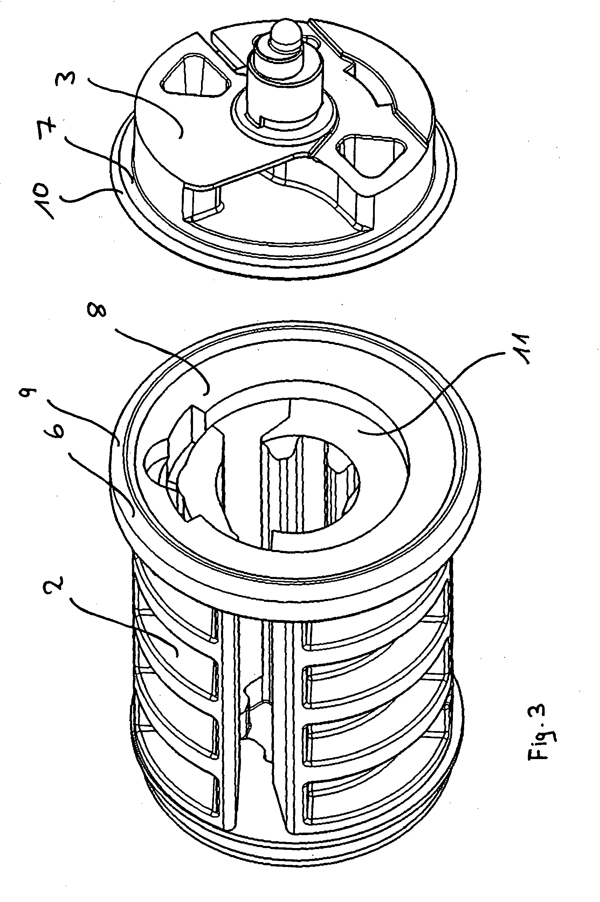

In der Fig.3 sind der Gurtwellenkörper 2 und der Profilkopf 3 in Explosionsdarstellung zu erkennen, wobei die Wandung 6 an ihrer radialen Außenseite mit einer Phase 9 versehen ist, durch die das Ergreifen der Wandung 6 in einem maschinellen Umformprozess erleichtert ist.

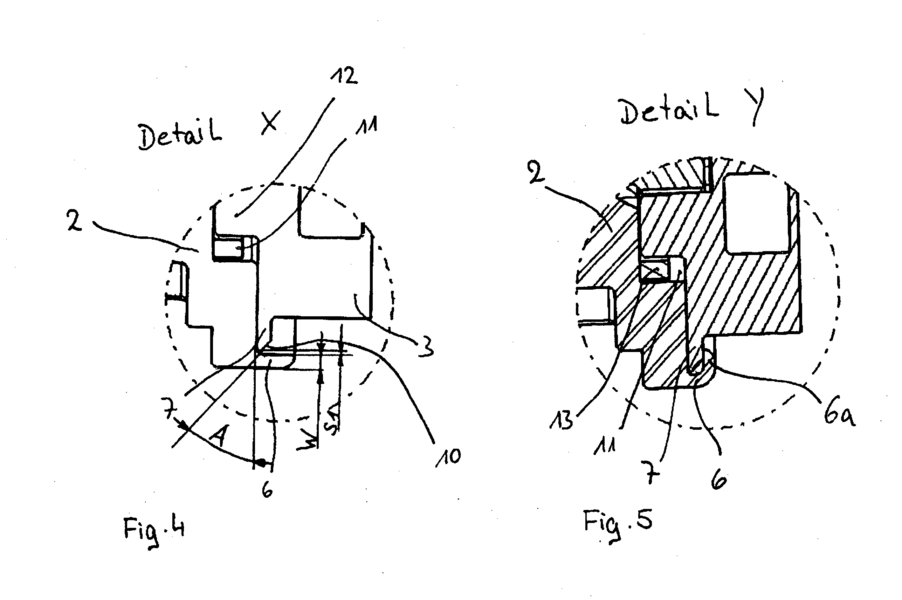

In den Fig.4 und 5 sind der Gurtwellenkörper 2 und der Profilkopf 3 in einem vergrößerten Ausschnitt X und Y entsprechend der Fig.1 und 2 zu erkennen. Die Wandstärke W der Wandung 6 soll vorzugsweise 0,9-1,3 mm, und besonders bevorzugt 1,0-1,2 mm betragen. Diese Wandstärke ermöglicht noch die Herstellung in einem Gießverfahren und erfüllt zusätzlich die Anforderung zur Ermöglichung des Umformprozesses sowie anschließend zur Aufnahme der bei der Kraftbegrenzung entstehenden Axialkräfte. Ferner ist zwischen dem Absatz 7 und der Wandung 6 ein Spalt S1 von 0,2-0,5 mm, bevorzugt 0,25 mm, vorgesehen, durch den ein prozesssicheres Zusammenfügen von Profilkopf 3 und Gurtwellenkörper 2 in einem automatisierten Fertigungsprozess möglich ist und zusätzlich während der Kraftbegrenzung eine Lagerfunktion des Gurtwellenkörpers 2 gegenüber dem feststehenden Profilkopf 3 gewährleistet ist. Aufgrund der erfindungsgemäßen Ausgestaltung der Lagerung des Gurtwellenkörpers kann in der bewusst größer gestalteten Aufnahme 11 zusätzlich noch ein zweites zwischen dem Profilkopf 3 und dem Gurtwellenkörper 2 wirkendes Kraftbegrenzungselement 13, z.B. ein durch eine Schikane gezogenes Biegeelement, vorgesehen werden. In Fig.5 ist die identische Anordnung zu erkennen, wobei hier das Ende 6a der Wandung 6 radial nach innen gebogen ist. Der Prozess des Umbiegens der Wandung 6 wird insbesondere dadurch erleichtert, indem der Absatz 7 an seiner von dem Gurtwellenkörper wegweisenden Seite eine Phase 10 aufweist. Die Phase 10 ist durch den Winkel "A" bemaßt und sollte z.B. 45 Grad betragen. Durch die Phase 10 verringert sich die innenseitig an der Wandung 6 anliegende Fläche des Absatzes 7, so dass die Wandung 6 im Bereich der Anlagefläche des Absatzes 7 beim Umbiegen einer erhöhten Belastung ausgesetzt wird. Aufgrund der erhöhten Belastung wird der Beginn der plastischen Verformung der Wandung 6 bewusst frühzeitig eingeleitet und die Wandung 6 förmlich umgeknickt. Ferner wird durch die Phase 10 sichergestellt, dass das Ende 6a nach dem Umformen an der von dem Gurtwellenkörper abgewandten Seite des Absatzes 7 unter Ausübung einer Klemmkraft mit einer ebenen Anlagefläche anliegt. Durch die erfindungsgemäße Anordnung der Phase 10 muss die Wandung 6 folglich nur um eine bewusst spitzwinklig ausgebildete Umformkante des Absatzes 7 gebogen werden, wobei die ansonsten vorhandene zweite Umformkante durch die Phase 10 in zwei Umformkanten mit jeweils einem Winkel größer 90 Grad umgewandelt wurde.

Als Umformprozesse bieten sich z.B. Umbördeln oder auch ein Taumelverfahren an, bei dem das Biegewerkzeug die Wandung 6 punktuell umformt und um den Gurtwellenkörper 2 in einer Taumelbewegung kreist.

## Patentansprüche

1. Selbstsperrender Gurtaufroller (1) mit einem Gurtwellenkörper (2), einem fahrzeugsensitiv und/oder gurtbandsensitiv blockierbaren Profilkopf (3) und einer zwischen dem Gurtwellenkörper (2) und dem Profilkopf (3) angeordneten Kraftbegrenzungseinrichtung (4), **dadurch gekennzeichnet, dass** der Profilkopf (3) oder der Gurtwellenkörper (2) einen radial nach außen vorstehenden Absatz (7) und der jeweils andere Teil (2 oder 3) eine durch eine axial gerichtete Wandung (6) gebildete Aufnahme (8) aufweist, in der der Profilkopf (3) oder der Gurtwellenkörper (2) mit dem Absatz (7) angeordnet ist, und die Wandung (6) den Absatz (7) wenigstens abschnittsweise mit einem radial nach innen gerichteten Ende (6a) hintergreift.

2. Selbstsperrender Gurtaufroller nach Anspruch 1, **dadurch gekennzeichnet, dass** der Absatz (7) an seiner von dem jeweils anderen Teil (2 oder 3) abgewandten Seite eine Phase (10) oder einen Radius aufweist.

3. Selbstsperrender Gurtaufroller nach einem der vorangegangenen Ansprüche, **dadurch gekennzeichnet, dass** die Wandung (6) eine Wandstärke von 0,9-1,3 mm aufweist.

4. Selbstsperrender Gurtaufroller nach einem der vorangegangenen Ansprüche, **dadurch gekennzeichnet, dass** die Wandung (6) eine radial innenseitig angeordnete Phase aufweist.

5. Selbstsperrender Gurtaufroller nach einem der vorangegangenen Ansprüche, **dadurch gekennzeichnet, dass** die Wandung (6) eine radial außenseitig angeordnete Phase (9) oder einen radial außenseitig angeordneten Radius aufweist.

6. Selbstsperrender Gurtaufroller nach einem der vorangegangenen Ansprüche, **dadurch gekennzeichnet, dass** das radial nach innen gerichtete Ende (6a) unter Ausübung einer Klemmkraft an dem Absatz (7) anliegt.

7. Selbstsperrender Gurtaufroller nach Anspruch 6, **dadurch gekennzeichnet, dass** die durch die Klemmkraft bewirkte Losbrechkraft mit dem Einsetzen der Relativdrehung des Gurtwellenkörpers (2) gegenüber dem blockierten Profilkopf (3) in Gurtauszugsrichtung kleiner als das Kraftbegrenzungsniveau der Kraftbegrenzungseinrichtung (4) ist.

8. Selbstsperrender Gurtaufroller nach einem der vorangegangenen Ansprüche, **dadurch gekennzeichnet, dass** der Innendurchmesser der Aufnahme (8) 0,4-1,0 mm größer als der Außendurchmesser des Absatzes (7) ist.

## Claims

1. A self-locking seat belt retractor (1) including a belt shaft body (2), a vehicle-sensitive and/or belt-sensitive lockable profile head (3), and a force-limiting device (4) disposed between the belt shaft body (2) and the profile head (3), **characterized in that** the profile head (3) or the belt shaft body (2) has a radially-outward-extending shoulder (7) and the other respective part (2 or 3) has a recess (8) formed by an axially-oriented wall (6), wherein the profile head (3) or the seat belt body (2) is disposed with the recess (7), and the wall (6) engages behind the shoulder (7) at least in sections with a radially-inward-oriented end (6a).

2. The self-locking seat belt retractor according to claim 1, **characterized in that** the shoulder (7) has a step (10) or a radius on its side facing away from the other respective part (2 or 3).

3. The self-locking seat belt retractor according to one of the preceding claims, **characterized in that** the wall (6) has a wall thickness of 0.9 - 1.3 mm.

4. The self-locking seat belt retractor according to one of the preceding claims, **characterized in that** the wall (6) has a step disposed on the radially-inner side.

5. The self-locking seat belt retractor according to one of the preceding claims, **characterized in that** the wall (6) has a step (9) disposed on the radially-outer side or a radius disposed on the radially-outer side.

6. The self-locking seat belt retractor according to one of the preceding claims, **characterized in that** the radially-inward-oriented end (6a) abuts on the shoulder (7) upon exertion of a clamping force.

7. The self-locking seat belt retractor according to claim 6, **characterized in that** the breakaway force exerted by the clamping force with the starting of the relative rotation of the belt shaft body (2) with respect to the locked profile head (3) is smaller in the belt withdrawal direction than the force-limiting level of the force-limiting device (4).

8. The self-locking seat belt retractor according to one of the preceding claims, **characterized in that** the inner diameter of the recess (8) is 0.4 - 1.0 mm greater than the outer diameter of the shoulder (7).

## Revendications

1. Enrouleur autobloquant (1) comportant un corps d'arbre (2) pour ceinture, une tête profilée (3) bloquante en fonction du véhicule et/ou de la ceinture de sécurité et un dispositif de limitation de force (4) situé entre le corps d'arbre (2) pour ceinture et la tête profilée (3), **caractérisé en ce que** la tête profilée (3) ou le corps d'arbre (2) pour ceinture présente un décrochement (7) dirigé radialement vers l'extérieur et l'autre partie respective (2 ou 3) présente un logement (8) formé dans une paroi (6) orientée axialement et dans lequel est disposée le décrochement (7) de la tête profilée (3) ou du corps d'arbre (2) pour ceinture, et **en ce que** la paroi (6) épouse l'arrière du décrochement (7), au moins par sections, avec une extrémité (6a) orientée radialement vers l'intérieur.

2. Enrouleur autobloquant selon la revendication 1, **caractérisé en ce que** le décrochement (7) présente, sur sa face détournée de l'autre partie respective (2 ou 3), une phase (10) ou un rayon.

3. Enrouleur autobloquant selon l'une quelconque des revendications précédentes, **caractérisé en ce que** la paroi (6) présente une épaisseur allant de 0,9 à 1,3 mm.

4. Enrouleur autobloquant selon l'une quelconque des revendications précédentes, **caractérisé en ce que** la paroi (6) présente une phase disposée radialement vers l'intérieur.

5. Enrouleur autobloquant selon l'une quelconque des revendications précédentes, **caractérisé en ce que** la paroi (6) présente une phase disposée radialement vers l'extérieur (9) ou un rayon disposé radialement vers l'extérieur.

6. Enrouleur autobloquant selon l'une quelconque des revendications précédentes, **caractérisé en ce que** l'extrémité (6a) orientée radialement vers l'intérieur épouse le décrochement (7) en exerçant une force de serrage.

7. Enrouleur autobloquant selon la revendication 6, **caractérisé en ce que** la force d'arrachement générée par la force de serrage, avec l'intervention de la rotation relative du corps d'arbre (2) pour ceinture par rapport à la tête profilée (3) bloquée, est plus petite, dans la direction de sortie de la ceinture, que le niveau de limitation de force du dispositif de limitation de force (4).

8. Enrouleur autobloquant selon l'une quelconque des revendications précédentes, **caractérisé en ce que** le diamètre intérieur du logement (8) est 0,4 à 1,0 mm plus grand que le diamètre extérieur du décrochement (7).
